# EUROPÄISCHE PATENTANMELDUNG

(11) **EP 1 837 582 A2**
(43) Veröffentlichungstag der Anmeldung: **26.09.2007**
(21) Anmeldenummer: 07004126.4
(22) Anmeldetag: 28.02.2007
(51) Int. Cl.: F16L 37/098

(54) **Steckkupplung**

(30) Priorität: 25.03.2006 DE 102006013899
(71) Anmelder: NORMA Germany GmbH, 63277 Maintal (DE)
(72) Erfinder: Bauer, Andreas, 63477 Maintal (DE)
(74) Vertreter: Knoblauch, Andreas

(57) **Zusammenfassung**

Es wird eine Steckkupplung (1) zum Verbinden zweier Fluidleitungen angegeben mit einem ersten Teil (2), das einen Vorsprung (3) mit einer zu einem axialen Ende (5) hin gerichteten Anlauffläche (4) und einer zum anderen axialen Ende (7) hin gerichteten Anschlagfläche (6) aufweist, und einem zweiten Teil (9), das mindestens einen Haltearm (11) mit einer Rastnase (12) aufweist, die in einer Verriegelungsstellung hinter der Anschlagfläche (6) einrastet.

Man möchte erkennen können, ob die Steckkupplung richtig zusammengesetzt ist.

Hierzu ist vorgesehen, daß ein Montageindikator (17) der Rastnase (12) benachbart angeordnet ist, der in der Verriegelungsstellung nach außen über einen die Rastnase (12) aufweisenden Rastnasenabschnitt (16) des Haltearms (10, 11) übersteht und außerhalb der Verriegelungsstellung maximal so weit nach außen vorsteht wie der Rastnasenabschnitt (16).

## Beschreibung

Die Erfindung betrifft eine Steckkupplung zum Verbinden zweier Fluidleitungen mit einem ersten Teil, das einen Vorsprung mit einer zu einem axialen Ende hin gerichteten Anlauffläche und einer zum anderen axialen Ende hin gerichteten Anschlagfläche aufweist, und einem zweiten Teil, das mindestens einen Haltearm mit einer Rastnase aufweist, die in einer Verriegelungsstellung hinter der Anschlagfläche einrastet.

Eine derartige Steckkupplung ist beispielsweise aus DE 37 27 858 C2 bekannt. Bei der bekannten Steckkupplung weist das zweite Teil zwei diametral gegenüberliegende Haltearme auf, die durch einen elastisch verformbaren Ring miteinander verbunden sind. Wenn das erste Teil und das zweite Teil zusammengesteckt werden, dann drückt der Vorsprung die beiden Rastnasen, die auf der Anlauffläche auftreffen, auseinander und verformt dabei die Haltearme radial nach außen. Wenn die Rastnasen am Vorsprung vorbeigeführt worden sind, dann federn die Haltearme wieder in ihre Ausgangskonfiguration zurück. Wenn man die Steckkupplung lösen möchte, dann kann man den Ring zusammendrücken, wobei diese Druckrichtung etwa 90° zu der Achse versetzt ist, auf der die beiden Rastnasen angeordnet sind. Die beiden Rastnasen vergrö-βern dann ihren Abstand zueinander, so daß sie von der Anschlagfläche freikommen. In diesem Fall kann man das zweite Teil aus dem ersten Teil wieder herausziehen.

Eine derartige Steckkupplung hat sich grundsätzlich bewährt. Allerdings ist es unter bestimmten Montagebedingungen schwierig, das Einrasten zuverlässig zu kontrollieren. In vielen Fällen ist die Steckkupplung an einer nicht sichtbaren Stelle angeordnet, so daß eine visuelle Kontrolle praktisch nicht oder unter erschwerten Bedingungen möglich ist. In diesem Fall ist es auch nicht immer möglich, die Verbindung akustisch zu kontrollieren. Wenn der Geräuschpegel es zuläßt, dann kann der Monteur beim erfolgreichen Zusammenstecken der beiden Teile ein Klicken wahrnehmen, das anzeigt, daß die Rastnase hinter dem Vorsprung eingerastet ist. Bei einer Montageumgebung, in der ein größerer Geräuschpegel herrscht, beispielsweise in einer Fabrikhalle, in der Kraftfahrzeuge montiert werden, steht diese akustische Information aber nicht immer oder nicht mit der nötigen Zuverlässigkeit zur Verfügung.

Der Erfindung liegt die Aufgabe zugrunde, zu erkennen, ob die Steckkupplung richtig zusammengesetzt ist.

Diese Aufgabe wird bei einer Steckkupplung der eingangs genannten Art dadurch gelöst, daß ein Montageindikator der Rastnase benachbart angeordnet ist, der in der Verriegelungsstellung nach außen über einen die Rastnase aufweisenden Rastnasenabschnitt des Haltearms übersteht und außerhalb der Verriegelungsstellung maximal so weit nach außen vorsteht wie der Rastnasenabschnitt.

Mit einem derartigen Montageindikator kann der Monteur ertasten oder fühlen, ob die beiden Teile der Steckkupplung richtig miteinander verbunden sind, d.h. ob die Rastnase hinter dem Vorsprung eingerastet ist oder nicht. Wenn die Rastnase hinter dem Vorsprung eingerastet ist, dann steht der Montageindikator nach außen über den Abschnitt des Haltearms vor, an dessen radialer Innenseite die Rastnase angeordnet ist, dem sogenannten Rastnasenabschnitt. Befindet sich hingegen die Rastnase nicht hinter der Anschlagfläche, ist also noch nicht eingerastet, dann ist der Rastnasenabschnitt durch die Anlauffläche radial nach außen gedrückt, so wie der Montageindikator auch. In diesem Fall gibt es keine Stufe zwischen der Außenseite des Rastnasenabschnitts und dem Montageindikator. Der Monteur kann mit seinen Fingern leicht feststellen, ob eine derartige Stufe vorhanden ist, d.h. ob er den Montageindikator fühlen kann. Wenn er den Montageindikator fühlen kann, dann ist die Rastnase hinter der Anschlagfläche eingerastet. Wenn er den Montageindikator nicht fühlen kann, dann ist das Einrasten noch nicht erfolgt, und die Verbindung zwischen den beiden Teilen der Steckkupplung muß überprüft und korrigiert werden.

Vorzugsweise ist der Montageindikator fest mit dem zweiten Teil verbunden. In einer besonders bevorzugten Ausgestaltung ist vorgesehen, daß er einstückig mit dem zweiten Teil ausgebildet ist. Dies läßt sich in einfacher Weise dann erreichen, wenn das zweite Teil durch Spritzgießen hergestellt ist. In diesem Fall kann der Montageindikator zusammen mit dem zweiten Teil gespritzt werden. Wenn der Montageindikator fest mit dem zweiten Teil verbunden ist, dann ist er unverlierbar am zweiten Teil gehalten, so daß er nicht verlorengehen kann. Wenn die beiden Teile der Steckkupplung dann richtig miteinander verbunden sind, die Rastnase also hinter der Anschlagfläche eingerastet ist, dann ist der Montageindikator für den Monteur auf jeden Fall fühlbar.

Vorzugsweise weist der Montageindikator einen Indikatorabschnitt auf, der die gleiche Dicke wie der Rastnasenabschnitt aufweist. Solange also die Rastnase nicht hinter der Anschlagfläche eingerastet ist, bilden der Indikatorabschnitt und der Rastnasenabschnitt eine gemeinsame Platte, in der eine Stufe nicht fühlbar ist. Erst dann, wenn die Rastnase hinter der Anschlagfläche eingerastet ist, ergibt sich die erwähnte Stufe, die für den Monteur fühlbar ist. Die Verwendung gleicher Dicken erleichtert die Fertigung.

Bevorzugterweise schließt der Indikatorabschnitt im unmontierten Zustand des zweiten Teils außen mit dem Rastnasenabschnitt ab. Damit ergibt sich im unmontierten Zustand keine Stufe zwischen dem Rastnasenabschnitt und dem Indikatorabschnitt, und zwar auch nicht in die "falsche Richtung". Es ist zwar grundsätzlich möglich, das Vorhandensein einer Stufe zuverlässig durch Tasten oder Fühlen festzustellen. Es ist jedoch nicht allen Menschen möglich zu erfühlen, in welche Richtung eine Stufe orientiert ist. Wenn man nun dafür sorgt, daß im unmontierten Zustand überhaupt keine Stufe vorhanden ist, dann ist auch bei der Montage, solange die Rastnase und der Montageindikator gemeinsam die Anlauffläche hinaufgleiten, keine Stufe vorhanden. Die Stufe ergibt sich erst dann, wenn die Rastnase hinter der Anschlagfläche eingerastet ist und die beiden Teile hier richtig montiert sind.

Bevorzugterweise ist der Indikatorabschnitt über einen Federarm mit dem zweiten Teil verbunden. Der Montageindikator federt dann beim Demontieren der beiden Teile wieder in seine Ausgangsposition zurück, so daß der Montageindikator auch bei einem nachfolgenden erneuten Verbinden der beiden Teile genutzt werden kann.

Hierbei ist bevorzugt, daß der Indikatorabschnitt über einen Übergangsabschnitt mit abnehmender Dicke mit dem Federarm verbunden ist. Damit läßt sich erreichen, daß der Montageindikator an seiner äußeren Oberfläche eine weitgehende ebene Form behält, so daß hier keine zusätzlichen Brüche oder Stufen entstehen können, die den Monteur beim Überprüfen der Verbindung durch Betasten irritieren könnten.

Vorzugsweise ist der Montageindikator in Umfangsrichtung innerhalb des Haltearms angeordnet. Damit steht am Haltearm eine relativ große Fläche zur Verfügung, aus der der Montageindikator herausragt, wenn die Rastnase eingerastet ist. Dies erleichtert es, durch Ertasten festzustellen, ob die Verbindung zwischen den beiden Teilen richtig erfolgt ist oder nicht.

Bevorzugterweise weist der Montageindikator eine in Axialrichtung weisende Spitze auf. Die Spitze ist dann das Teil, das am weitesten radial nach außen vorsteht. Sie ist für den Monteur auch dann leicht zu fühlen, wenn er beispielsweise Handschuhe trägt.

Vorzugsweise ist ein axialer Abstand zwischen dem Montageindikator und dem Rastnasenabschnitt maximal so groß wie die axiale Erstreckung einer an die Anschlagfläche anschließenden Umfangsfläche des Vorsprungs. Damit wird gewährleistet, daß der Indikatorabschnitt des Montageindikators dann, wenn die Rastnase hinter der Anschlagfläche eingerastet ist, so weit wie möglich au-βen über den Rastnasenabschnitt vorsteht. Dies erleichtert es, die Anwesenheit des Montageindikators festzustellen.

Vorzugsweise sind mindestens zwei Haltearme mit Rastnasen vorgesehen und jeder Rastnase ist ein Montageindikator zugeordnet. Damit läßt sich bei jeder Rastnase getrennt feststellen, ob die Verbindung erfolgreich zustande gekommen ist, also ob die jeweilige Rastnase hinter der Anschlagfläche eingerastet ist oder nicht. In vielen Fällen reicht es zwar aus, wenn eine Rastnase hinter der Anschlagfläche eingerastet ist. Qualitätsanforderungen verlangen es jedoch auch, daß man bei allen Rastnasen das Einrasten überprüfen können muß. Dies wird auf einfache Weise durch eine der Anzahl von Rastnasen entsprechende Anzahl von Montageindikatoren sichergestellt.

Hierbei ist bevorzugt, daß die Haltearme durch einen elastisch verformbaren Ring miteinander verbunden sind. Der Ring sorgt zusätzlich dafür, daß die Rastnasen radial nach innen gezogen werden und dadurch hinter der Anschlagfläche einrasten können. Dadurch wird auch sichergestellt, daß die Rastnasenabschnitte radial über den Montageindikatoren, genauer gesagt den Indikatorabschnitten, radial nach innen gezogen werden, was die Kontrolle ebenfalls erleichtert.

Die Erfindung wird im folgenden anhand eines bevorzugten Ausführungsbeispiels in Verbindung mit der Zeichnung beschrieben. Hierin zeigen:
- Fig. 1: eine Steckkupplung vor dem Verbinden ihrer beiden Teile,
- Fig. 2: die Steckkupplung im montierten Zustand,
- Fig. 3: eine perspektivische Darstellung des zweiten Teils und
- Fig. 4: eine Draufsicht auf den zweiten Teil der Steckkupplung.

Eine Steckkupplung 1 weist ein erstes Teil 2 mit einem umlaufenden Vorsprung 3 auf, der eine Anlauffläche 4 aufweist, die zu einem ersten axialen Ende 5 hin gerichtet ist, und eine Anschlagfläche 6, die zu einem zweiten Ende 7 hin gerichtet ist. Die Anlauffläche 4 ist konisch geneigt. Die Anschlagfläche 6 ist im wesentlichen senkrecht zu einer Achse 8 des ersten Teils 2 gerichtet.

Die Steckkupplung 1 weist ein zweites Teil 9 auf. Am zweiten Teil sind zwei diametral gegenüberliegende Haltearme 10, 11 angeordnet, die an ihrer radialen Innenseite jeweils eine Rastnase 12 aufweisen. Die beiden Haltearme 10, 11 sind durch einen elastisch verformbaren Ring 13 miteinander verbunden. Der Ring 13 weist etwa mittig zwischen den beiden Haltearmen 10, 11 Griffbereiche 14, 15 auf. Wenn der Ring 13 an den Griffbereichen 14, 15 zusammengedrückt wird, dann werden die Haltearme 10, 11 radial nach außen gebogen und damit auch die Rastnasen 12 radial nach außen bewegt.

Jede Rastnase 12 ist an einem Rastnasenabschnitt 16 des Haltearms 10, 11 angeordnet.

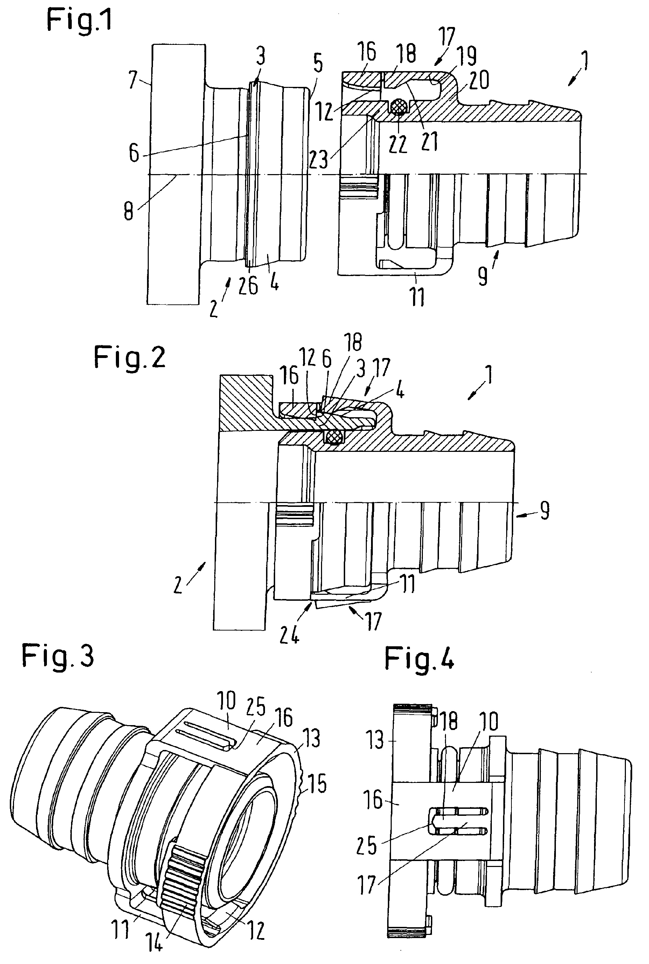

Inmitten eines jeden Haltearms 10, 11 ist ein Montageindikator 17 angeordnet. Der Montageindikator 17 weist einen Indikatorabschnitt 18 auf, der auf der vom ersten Teil 2 abgewandten Seite des Rastnasenabschnitts 16 angeordnet ist. Der Indikatorabschnitt 18 weist die gleiche radiale Dicke wie der Rastnasenabschnitt 16 auf. Er erstreckt sich im unmontierten Zustand (Fig. 1) gleich weit nach außen wie der Rastnasenabschnitt 16. Auch auf der Innenseite erstreckt sich der Indikatorabschnitt 18 genauso weit radial nach innen wie der Rastnasenabschnitt 16.

Der Rastnasenabschnitt 18 ist an einem Federarm 19 aufgehängt, der einstückig mit einer Basis 20 verbunden ist, an der auch der Haltearm 10 befestigt ist. Der Montageindikator 17 kann mit den übrigen Bestandteilen des zweiten Teils 9 einstückig hergestellt werden, beispielsweise durch Spritzgießen.

Der Indikatorabschnitt 18 geht über einen Übergangsbereich 21 in den Federarm 19 über, dessen Dicke vom Indikatorabschnitt 18 zum Federarm 19 abnimmt.

Ein Dichtring 22 am zweiten Teil 9 ist vorgesehen, um einen in das erste Teil 2 eingeschobenen Stutzen 23 des zweiten Teils 9 gegenüber dem ersten Teil 2 abzudichten.

Wenn nun das erste Teil 2 und das zweite Teil 9 zusammengesetzt werden, so daß sich letztendlich eine Verbindung ergibt, wie sie in Fig. 2 dargestellt ist, dann kommt zunächst die Rastnase 12 eines jeden Haltearms 10, 11 zur Anlage an die Anlauffläche 4. Beim weiteren Aufschieben des zweiten Teils 9 auf das erste Teil 2 wird die Rastnase 12 und damit der Rastnasenabschnitt radial nach außen bewegt und zwar so lange, bis der Rastnasenabschnitt 16 am Vorsprung 3 vorbeigeführt worden ist und die Rastnase 12 hinter der Anschlagfläche 6 einrastet, d.h. sich radial nach innen bewegt und hinter der Anschlagfläche 6 verhakt.

Der Montageindikator 17 steht hingegen mit seinem Indikatorabschnitt noch auf der Anlauffläche 4 auf, so daß er nach außen über den Rastnasenabschnitt 16 übersteht, d.h. es ergibt sich ein radialer Abstand mit einer Stufe 24, der von einem Monteur leicht erfühlt werden kann.

Diese Stufe 24 ergibt sich allerdings erst dann, wenn die Rastnase 12 hinter der Anschlagfläche 6 eingerastet ist. Solange der Rastnasenabschnitt 16 noch nicht über den Vorsprung 3 hinweg bewegt worden ist, befindet sich der Indikatorabschnitt 18 des Montageindikators 17 mit seiner Außenseite in der gleichen Ebene wie der Rastnasenabschnitt 16 mit seiner Außenseite. Solange also die Rastnase 12 nicht hinter der Anschlagfläche 6 eingerastet ist, kann der Monteur keine Stufe oder keinen Vorsprung fühlen.

Wie sich beispielsweise aus Fig. 1 und 2 ergibt, ist für jeden Haltearm 10, 11 ein Montageindikator 17 vorgesehen, so daß für jede Rastnase 12 getrennt überwacht werden kann, ob sie hinter der Anschlagfläche 6 eingerastet ist oder nicht.

Wie insbesondere aus den Fig. 3 und 4 zu erkennen ist, weist der Montageindikator an seinem Indikatorabschnitt 18 eine Spitze 25 auf, die letztendlich am weitesten aus dem Haltearm 10, 11 herausragt, wenn die Rastnase 12 richtig hinter der Anschlagfläche 6 eingerastet ist. Die Ausbildung des Indikatorabschnitts 18 mit der Spitze 25 hat den Vorteil, daß die Spitze 25 für den Monteur sehr deutlich zu ertasten ist.

Der axiale Abstand zwischen dem Indikatorabschnitt 18 und dem Rastnasenabschnitt 16 soll so klein wie möglich sein. Er sollte auf jeden Fall maximal so groß sein, wie die axiale Erstreckung einer Umfangsfläche 26 des Vorsprungs 3, die sich an die Anschlagfläche 6 in Richtung zum ersten axialen Ende 5 des ersten Teils 2 anschließt. Damit ist gewährleistet, daß der Indikatorabschnitt 18 dann, wenn die Rastnase 12 hinter der Anschlagfläche 6 eingerastet ist, so weit wie möglich aus den Haltearmen 10, 11 vorsteht.

## Patentansprüche

1. Steckkupplung zum Verbinden zweier Fluidleitungen mit einem ersten Teil, das einen Vorsprung mit einer zu einem axialen Ende hin gerichteten Anlauffläche und einer zum anderen axialen Ende hin gerichteten Anschlagfläche aufweist, und einem zweiten Teil, das mindestens einen Haltearm mit einer Rastnase aufweist, die in einer Verriegelungsstellung hinter der Anschlagfläche einrastet, **dadurch gekennzeichnet, daß** ein Montageindikator (17) der Rastnase (12) benachbart angeordnet ist, der in der Verriegelungsstellung nach außen über einen die Rastnase (12) aufweisenden Rastnasenabschnitt (16) des Haltearms (10, 11) übersteht und außerhalb der Verriegelungsstellung maximal so weit nach außen vorsteht wie der Rastnasenabschnitt (16).

2. Steckkupplung nach Anspruch 1, **dadurch gekennzeichnet, daß** der Montageindikator (17) fest mit dem zweiten Teil (9) verbunden ist.

3. Steckkupplung nach Anspruch 1 oder 2, **dadurch gekennzeichnet, daß** der Montageindikator (17) einen Indikatorabschnitt (18) aufweist, der die gleiche Dicke wie der Rastnasenabschnitt (16) aufweist.

4. Steckkupplung nach Anspruch 3, **dadurch gekennzeichnet, daß** der Indikatorabschnitt (18) im unmontierten Zustand des zweiten Teils (9) außen mit dem Rastnasenabschnitt (16) abschließt.

5. Steckkupplung nach Anspruch 3 oder 4, **dadurch gekennzeichnet, daß** der Indikatorabschnitt (18) über einen Federarm (19) mit dem zweiten Teil (9) verbunden ist.

6. Steckkupplung nach Anspruch 5, **dadurch gekennzeichnet, daß** der Indikatorabschnitt (18) über einen Übergangsabschnitt (21) mit abnehmender Dicke mit dem Federarm (19) verbunden ist.

7. Steckkupplung nach einem der Ansprüche 1 bis 6, **dadurch gekennzeichnet, daß** der Montageindikator (17) in Umfangsrichtung innerhalb des Haltearms (10, 11) angeordnet ist.

8. Steckkupplung nach einem der Ansprüche 1 bis 7, **dadurch gekennzeichnet, daß** der Montageindikator (17) eine in Axialrichtung weisende Spitze (25) aufweist.

9. Steckkupplung nach einem der Ansprüche 1 bis 8, **dadurch gekennzeichnet, daß** ein axialer Abstand zwischen dem Montageindikator (17) und dem Rastnasenabschnitt (16) maximal so groß ist wie die axiale Erstreckung einer an die Anschlagfläche (6) anschließenden Umfangsfläche (26) des Vorsprungs (3) .

10. Steckkupplung nach einem der Ansprüche 1 bis 9, **dadurch gekennzeichnet, daß** mindestens zwei Haltearme (10, 11) mit Rastnasen (12) vorgesehen sind und jeder Rastnase (12) ein Montageindikator (17) zugeordnet ist.

11. Steckkupplung nach Anspruch 10, **dadurch gekennzeichnet, daß** die Haltearme (10, 11) durch einen elastisch verformbaren Ring (13) miteinander verbunden sind.
